# EUROPÄISCHE PATENTSCHRIFT

(11) **EP 3 171 139 B1**
(45) Veröffentlichungstag und Bekanntmachung des Hinweises auf die Patenterteilung: **19.12.2018**
(21) Anmeldenummer: 16188556.1
(22) Anmeldetag: 13.09.2016
(51) Int. Cl.: G01F 25/00, G01F 1/58, G01F 1/60

(54) **VERFAHREN ZUR DURCHFLUSSMESSUNG DURCH EIN MAGNETISCH-INDUKTIVES DURCHFLUSSMESSGERÄT**
METHOD FOR MEASURING THE FLOW RATE WITH A MAGNETIC INDUCTIVE FLOW METER
PROCEDE DE MESURE DE DEBIT A L'AIDE D'UN DEBITMETRE MAGNETO-INDUCTIF

(30) Priorität: 19.11.2015 DE 102015120103
(43) Veröffentlichungstag der Anmeldung: 24.05.2017
(73) Patentinhaber: Krohne AG, 4019 Basel (CH)
(72) Erfinder: Hunter, Martijn, 2992 HG Barendrecht (NL); Neven, Joseph, 26100 Romans (FR); Paul, Christian, 3069 HP Rotterdam (NL); Spiegel, Christoph, 46049 Oberhausen (DE)
(74) Vertreter: Gesthuysen Patent- und Rechtsanwälte

(56) Entgegenhaltungen:
- WO-A1-98/45670
- JP-A- 2001 194 195
- US-A- 3 707 675
- US-A- 4 704 907
- US-A- 5 905 206
- US-A1- 2003 029 250
- US-A1- 2007 234 820

## Beschreibung

Die Erfindung betrifft ein Verfahren zur Durchflussmessung durch ein magnetisch-induktives Durchflussmessgerät mit einem Messrohr und einer Magnetfelderzeugungseinrichtung, wobei von der Magnetfelderzeugungseinrichtung ein Magnetfeld erzeugt wird und wobei das Magnetfeld jeweils in zeitlichen Abständen von Invertierungsintervallen invertiert wird.

Ein gattungsgemäßes magnetisch-induktives Durchflussmessgerät misst den Durchfluss eines Mediums durch das Messrohr, wobei das Messrohr für gewöhnlich vollständig mit dem Medium gefüllt ist. Dazu wird das Magnetfeld von der Magnetfelderzeugungseinrichtung derart erzeugt, dass das Magnetfeld das im Messrohr befindliche Medium zumindest teilweise durchsetzt und ein Durchfluss des Mediums durch das Messrohr eine Induktionsspannung in dem Medium induziert. Die Induktionsspannung ist dabei proportional zur magnetischen Flussdichte des Magnetfelds im Medium. Für gewöhnlich weist die Magnetfelderzeugungseinrichtung einen Elektromagneten mit einer Spule zur Erzeugung des Magnetfelds und mit einem Joch zur Führung des Magnetfelds auf. Die Induktionsspannung ist proportional zu einer Durchflussgeschwindigkeit des Mediums durch das Messrohr und aus der Durchflussgeschwindigkeit wird z. B. unter Verwendung einer Innenquerschnittsfläche des Messrohrs ein Volumendurchfluss des Mediums durch das Messrohr oder unter zusätzlicher Verwendung einer Dichte des Mediums ein Massedurchfluss des Mediums durch das Messrohr bestimmt. Der Durchfluss des Mediums durch das Messrohr bezieht sich demnach sowohl auf den Volumendurchfluss als auch auf den Massedurchfluss des Mediums durch das Messrohr.

Die Invertierung des Magnetfelds erfolgt jeweils innerhalb eines der Invertierungsintervalle und entspricht einer Umkehrung der Richtung des Magnetfelds. Demnach ist die Stärke des Magnetfelds im jeweiligen Invertierungsintervall zunächst transient und nach dem Einschwingen konstant. Ein derartiges Magnetfeld wird auch als geschaltetes oder als getaktetes Gleichmagnetfeld bezeichnet. Wenn ein Elektromagnet mit einer Spule das Magnetfeld erzeugt, wird ein geschaltetes Magnetfeld z. B. dadurch erzeugt, dass in die Spule ein konstanter Strom eingeprägt wird und die Richtung des Stroms nach Invertierungsintervallen umgekehrt wird.
Die Durchflussgeschwindigkeit eines Mediums durch das Messrohr ist zumeist von Null verschieden, kann aber auch Null betragen, so dass das Medium im Messrohr stillsteht. Ein gemessener Durchfluss bei einem im Messrohr stillstehenden Medium wird auch als Nulldurchfluss bezeichnet. Steht ein Medium im Messrohr still und ist der gemessene Nulldurchfluss ungleich Null, wird der gemessene Nulldurchfluss auch als Nulldurchflussfehler bezeichnet. Ein Durchfluss, der bei einer von Null verschiedenen Durchflussgeschwindigkeit gemessen wird, ist von dem Nulldurchflussfehler überlagert, wodurch die Messgenauigkeit des Durchflusses vermindert ist.
Aus der EP 1 970 675 A2 ist ein magnetisch-induktives Durchflussmessgerät bekannt, das ausgebildet ist, Nulldurchflüsse eines Mediums zu messen, eine Abweichung von aufeinanderfolgenden gemessenen Nulldurchflüssen zu bestimmen und, falls die Abweichung einen vorgegebenen Wertebereich überschreitet, die Überschreitung auszugeben. Aus der US 5,402,685 ist bekannt, magnetisch-induktive Durchflussmessgeräte mit einer Kalibrier- und Nullabgleicheinrichtung auszustatten. Die US 2007/0088511 A1 schlägt verschiedene Methoden zur Verbesserung der Messgenauigkeit von magnetisch-induktiven Durchflussmessgeräten vor.

Aus der US 4 704 907 A ist ein Verfahren bekannt, wobei eine dreieckförmig moduliertes Magnetfeld induzierte Spannung zur Bestimmung des Nulldurchflussfehlers verwendet wird.

Aus dem Stand der Technik sind Verfahren zur Durchflussmessung durch ein gattungsgemäßes magnetisch-induktives Durchflussmessgerät bekannt, bei deren Ausführung ein Durchfluss eines Mediums durch das Messrohr gemessen wird und wobei der gemessene Durchfluss vom tatsächlichen Durchfluss des Mediums um einen durch das Verfahren nicht detektierbaren Nulldurchflussfehler abweichen kann.

Der Erfindung liegt daher die Aufgabe zugrunde, ein Verfahren zur Durchflussmessung anzugeben, dass die Detektion eines Nulldurchflussfehlers ermöglicht.

Das erfindungsgemäße Verfahren, bei dem die zuvor hergeleitete und aufgezeigte Aufgabe gelöst ist, ist zunächst und im Wesentlichen durch die folgenden Verfahrensschritte gekennzeichnet:
In einem ersten Verfahrensschritt wird das Messrohr mit einem ersten Medium vollständig befüllt, wobei das erste Medium im befüllten Messrohr stillsteht. Das erste Medium ist z. B. Wasser oder ein anderes Medium, das zur Durchflussmessung durch magnetisch-induktive Durchflussmessgeräte geeignet ist. Dann wird über einem ersten Messintervall die Stärke des Magnetfelds gemessen und eine Ableitung nach der Zeit der gemessenen Stärke des Magnetfelds für das erste Messintervall bestimmt. Der erste Verfahrensschritt wird vorzugsweise während einer Kalibrierung des magnetisch-induktiven Durchflussmessgeräts ausgeführt. Für gewöhnlich wird die Kalibrierung vor der Installation eines magnetisch-induktiven Durchflussmessgeräts an seinem Betriebsort ausgeführt.

In einem zweiten Verfahrensschritt wird das Messrohr von einem zweiten Medium durchflossen. Dabei wird über einem zweiten Messintervall die Stärke des Magnetfelds gemessen und eine Ableitung nach der Zeit der gemessenen Stärke des Magnetfelds für das zweite Messintervall bestimmt. Das zweite Medium ist entweder identisch mit dem ersten Medium oder ist ein anderes Medium, das zur Durchflussmessung für magnetisch-induktive Durchflussmessgeräte geeignet ist. Auch das zweite Medium füllt das Messrohr vollständig. Als Durchfluss des zweiten Mediums durch das Messrohr wird auch ein im Messrohr stillstehendes zweites Medium angesehen.

In einem dritten Verfahrensschritt wird eine erste Ableitungsabweichung der Ableitung für das zweite Messintervall von der Ableitung für das erste Messintervall bestimmt. Die erste Ableitungsabweichung kann z. B. eine Differenz zwischen der Ableitung für das zweite Messintervall und der Ableitung für das erste Messintervall sein.

In einem vierten Verfahrensschritt wird die bestimmte erste Ableitungsabweichung einem Nulldurchflussfehler zugeordnet.

Die nach dem ersten Verfahrensschritt folgenden Verfahrensschritte werden für gewöhnlich am Betriebsort des magnetisch-induktiven Durchflussmessgeräts ausgeführt, wobei das Messrohr von dem Medium am Betriebsort durchflossen wird. Aber auch der erste Verfahrensschritt ist am Betriebsort durchführbar, wenn gewährleistet ist, dass das Medium im Messrohr stillsteht.

Jedes Messintervall ist dabei derart in jeweils einem der Invertierungsintervalle angeordnet, dass in dem jeweiligen Messintervall die Stärke des Magnetfelds transient ist. Dadurch wird gewährleistet, dass Ableitungen nach der Zeit der gemessenen Stärke des Magnetfelds von Null verschieden sind.

Erfindungsgemäß ist während einer intensiven Studie von Nulldurchflusseffekten an im Messrohr eines gattungsgemäßen magnetisch-induktiven Durchflussmessgeräts stillstehenden Medien eine klare Beziehung zwischen einer Stabilisierung der Stärke des Magnetfelds und einem gemessenen Nulldurchfluss erkannt worden. In der Studie ist der Nulldurchfluss über vollständige Invertierungsintervalle gemessen worden. Dabei ist eine starke Korrelation zwischen der Ableitung nach der Zeit der Stärke des Magnetfelds und der gemessenen Durchflussgeschwindigkeit erkannt worden. Die Ableitung nach der Zeit der Stärke des Magnetfelds ist eine neue Kennlinie eines magnetisch-induktiven Durchflussmessgeräts, welche das magnetisch-induktive Durchflussmessgerät charakterisiert. Die Kennlinie ist zum Beispiel im magnetisch-induktiven Durchflussmessgerät für die Verwendung im Verfahren hinterlegt. Es ist erkannt worden, dass Abweichungen von der Kennlinie mit einem Nulldurchflussfehler korrespondieren. Abweichungen von dieser Kennlinie treten beim Betrieb eines magnetisch-induktiven Durchflussmessgeräts z. B. dann auf, wenn sich Eigenschaften des magnetisch-induktiven Durchflussmessgeräts mit der Zeit ändern. Wird das Magnetfeld z. B. durch einen Elektromagneten mit einem Joch und einer Treiberschaltung zur Versorgung des Elektromagneten mit einem elektrischen Strom erzeugt, ändern sich z. B. Eigenschaften von dem Joch und/oder der Treiberschaltung mit der Zeit.

Das erfindungsgemäße Verfahren hat gegenüber aus dem Stand der Technik bekannten Verfahren den Vorteil, dass Nulldurchflussfehler detektiert werden. Es ist insbesondere zusätzlich zu aus dem Stand der Technik bekannten Verfahren zur Durchflussmessung durch gattungsgemäße magnetisch-induktive Durchflussmessgeräte ausführbar. Über die Detektion von Nulldurchflussfehlern werden auch Veränderungen von Eigenschaften des magnetisch-induktiven Durchflussmessgeräts detektiert.

Da das Magnetfeld nach Invertierungsintervallen invertiert wird, ist in einer Ausgestaltung des erfindungsgemäßen Verfahrens vorgesehen, dass das erste Messintervall und das zweite Messintervall jeweils einem der Invertierungsintervalle entsprechen. Demnach entspricht die zeitliche Dauer des ersten Messintervalls der zeitlichen Dauer eines der Invertierungsintervalle und entspricht die zeitliche Dauer des zweiten Messintervalls der zeitlichen Dauer eines anderen der Invertierungsintervalle. Durch die Entsprechung des ersten Messintervalls und des zweiten Messintervalls mit jeweils einem der Invertierungsintervalle ist die Implementierung des erfindungsgemäßen Verfahrens vereinfacht.

Das erfindungsgemäße Verfahren kann unter Verwendung der Zuordnung der ersten Ableitungsabweichung zum Nulldurchflussfehler auf verschiedene zueinander alternative Weisen ausgestaltet werden.

In einer Ausgestaltung ist vorgesehen, dass im zweiten Messintervall ein Durchfluss des zweiten Mediums durch das Messrohr gemessen wird und der gemessene Durchfluss um den Nulldurchflussfehler korrigiert wird. Der Nulldurchflussfehler wird z. B. korrigiert, indem der Nulldurchflussfehler von dem gemessenen Durchfluss subtrahiert wird. Dadurch wird die Wirkung der ersten Ableitungsabweichung auf einfache Weise kompensiert.

In einer zur vorstehenden Ausgestaltung alternativen Ausgestaltung ist vorgesehen, dass über einem dritten Messintervall die Stärke des Magnetfelds gemessen wird und eine Ableitung nach der Zeit der gemessenen Stärke des Magnetfelds für das dritte Messintervall bestimmt wird. Dann wird eine zweite Ableitungsabweichung der Ableitung für das dritte Messintervall von der Ableitung für das erste Messintervall bestimmt. Weiterhin wird im dritten Messintervall ein Durchfluss des zweiten Mediums durch das Messrohr gemessen. Dabei wird die Stärke des Magnetfelds im dritten Messintervall derart eingestellt, dass die zweite Ableitungsabweichung zumindest reduziert ist im Vergleich zur ersten Ableitungsabweichung. In dieser Ausgestaltung wird nicht die Wirkung der ersten Ableitungsabweichung kompensiert, sondern die Ursache für die erste Ableitungsabweichung reduziert, so dass der im dritten Messintervall durch das Messrohr gemessene Durchfluss zumindest einen reduzierten Nulldurchflussfehler aufweist.

In einer weiteren alternativen Ausgestaltung ist vorgesehen, dass über einem dritten Messintervall die Stärke des Magnetfelds gemessen wird und die Ableitung nach der Zeit der gemessenen Stärke des Magnetfelds für das dritte Messintervall bestimmt wird. Dann wird eine zweite Ableitungsabweichung der Ableitung für das dritte Messintervall von der Ableitung für das erste Messintervall bestimmt. Weiterhin wird im dritten Messintervall ein Durchfluss des zweiten Mediums durch das Messrohr gemessen, im zweiten Messintervall ein Durchfluss des zweiten Mediums durch das Messrohr gemessen und ein Mittelwert aus dem im zweiten Messintervall gemessenen Durchfluss und dem im dritten Messintervall gemessenen Durchfluss bestimmt. Dabei wird die Stärke des Magnetfelds im dritten Messintervall derart eingestellt, dass die zweite Ableitungsabweichung der invertieren ersten Ableitungsabweichung entspricht. Der Nulldurchflussfehler überlagert sowohl den im zweiten als auch im dritten Messintervall gemessenen Durchfluss und wird durch die Invertierung der ersten Ableitungsabweichung im dritten Messintervall ebenfalls invertiert. Durch die Bestimmung des Mittelwerts aus dem im zweiten und dem im dritten Messintervall gemessenen Durchfluss wird somit der Nulldurchflussfehler kompensiert.

Wird das Magnetfeld z. B. durch einen Elektromagneten mit einem Joch und einer Treiberschaltung zur Versorgung des Elektromagneten mit einem elektrischen Strom erzeugt, ist die Ursache für eine Ableitungsabweichung z. B. eine Veränderung von Eigenschaften des Jochs mit der Zeit, also Alterung des Jochs. Die Stärke des Magnetfelds wird in diesem Beispiel durch die Höhe des von der Treiberschaltung erzeugten Stroms bestimmt, so dass durch eine geeignete Veränderung des Stroms in einem dritten Messintervall die zweite Ableitungsabweichung entsprechend der beiden vorangehenden Ausgestaltungen reduziert wird bzw. invertiert wird.

Da das Magnetfeld nach Invertierungsintervallen invertiert wird, ist es nicht nur vorteilhaft, wenn sowohl das erste Messintervall als auch das zweite Messintervall jeweils einem der Invertierungsintervalle entsprechen, sondern es ist auch vorteilhaft, wenn das dritte Messintervall einem weiteren der Invertierungsintervalle entspricht.

In einer weiteren Ausgestaltung des Verfahrens ist vorgesehen, dass die Invertierungsintervalle konstant sind. Die Invertierungsintervalle sind konstant, wenn ihre zeitlichen Dauern identisch sind. Konstante Invertierungsintervalle vereinfachen die Umsetzung des erfindungsgemäßen Verfahrens.

Als Stärke des Magnetfelds kann entweder eine magnetische Feldstärke oder eine magnetische Flussdichte des Magnetfelds angenommen werden.

In einer Ausgestaltung ist vorgesehen, dass eine magnetische Feldstärke des Magnetfelds von einem Hallsensor gemessen wird und dass die gemessene magnetische Feldstärke als die Stärke des Magnetfelds angenommen oder aus der gemessenen magnetischen Feldstärke die Stärke des Magnetfelds bestimmt wird. Z. B. wird als die Stärke des Magnetfelds die magnetische Flussdichte angenommen und wird aus der magnetischen Feldstärke unter Verwendung der Permeabilität des Mediums die magnetische Flussdichte im Medium bestimmt.

In einer zur vorstehenden Ausgestaltung alternativen Ausgestaltung ist vorgesehen, dass eine zeitliche Änderung einer magnetischen Flussdichte des Magnetfelds von einer Messspule gemessen wird und dass die gemessene zeitliche Änderung der magnetischen Flussdichte als Messung der Stärke des Magnetfelds und als Ableitung nach der Zeit der Stärke des Magnetfelds angenommen wird. Demnach ist die Verwendung der Messspule insbesondere dann vorteilhaft, wenn als die Stärke des Magnetfelds die magnetische Flussdichte des Magnetfelds angenommen wird, weil die Messspule die zeitliche Ableitung der magnetischen Flussdichte unmittelbar misst und dadurch die Messung der Stärke des Magnetfelds und die Ableitung nach der Zeit der Stärke des Magnetfelds zusammenfallen.

Im Einzelnen ist eine Vielzahl von Möglichkeiten gegeben, das erfindungsgemäße Verfahren auszugestalten und weiterzubilden. Dazu wird verwiesen auf die dem Patentanspruch 1 nachgeordneten Patentansprüche und auf die nachfolgende Beschreibung eines bevorzugten Ausführungsbeispiels in Verbindung mit der Zeichnung. In der Zeichnung zeigt
- Fig. 1: ein Ausführungsbeispiel eines magnetisch-induktiven Durchflussmessgeräts im regulären Betrieb und
- Fig. 2: einen Ablaufplan eines Verfahrens zur Durchflussmessung für das magnetisch-induktive Durchflussmessgerät.

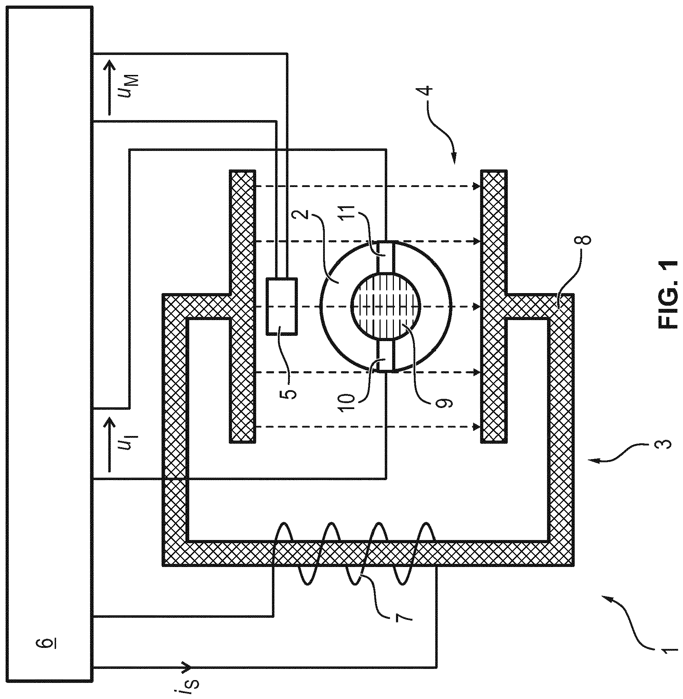

Fig. 1 zeigt das magnetisch-induktive Durchflussmessgerät 1 im regulären Betrieb am Betriebsort. Das magnetisch-induktive Durchflussmessgerät 1 weist das Messrohr 2, die Magnetfelderzeugungseinrichtung 3 zur Erzeugung des Magnetfelds 4, den Hall-Sensor 5 und die Steuerungseinrichtung 6 auf. In einem alternativen Ausführungsbeispiel weist das magnetisch-induktive Durchflussmessgerät 1 an der Stelle des Hall-Sensors 5 eine Messspule auf.

Die Magnetfelderzeugungseinrichtung 3 weist ihrerseits die Spule 7 und das Joch 8 auf und stellt somit einen Elektromagneten dar. Die Spule 7 ist in einem Abschnitt des Jochs 8 um dieses gewickelt und das Joch 8 besteht aus einem Material mit einem im Vergleich zur Umgebung des Jochs 8 geringeren magnetischen Widerstand, so dass das von dem Spulenstrom is erzeugte Magnetfeld 4 sich vorzugsweise im Joch 8 ausbreitet. Das Joch 8 ist derart ausgestaltet, dass es einen magnetischen Kreis mit einem Luftspalt bildet, wobei im Luftspalt das Messrohr 2 angeordnet ist. In Fig. 1 ist nur das Magnetfeld 4 im Luftspalt schematisch dargestellt. Das Magnetfeld 4 durchsetzt das Messrohr 2 und das durch das Messrohr 2 fließende zweite Medium 9 zumindest teilweise. Dabei ist die Richtung des Magnetfelds 4 senkrecht zur Flussrichtung des zweiten Mediums 9, wodurch in das zweite Medium 9 ein elektrischer Potentialverlauf induziert wird, dessen Richtung sowohl senkrecht zur Richtung des Magnetfelds 4 als auch senkrecht zur Flussrichtung des zweiten Mediums 9 ausgerichtet ist.

Die Wand des Messrohrs 2 besteht aus einem Material, welches für Magnetfelder transparent ist, also das Magnetfeld 4 nicht beeinflusst. In der Wand des Messrohrs 2 sind gegenüberliegend zwei Ausnehmungen, wobei in der einen Ausnehmung die erste Messelektrode 10 und in der anderen Ausnehmung die zweite Messelektrode 11 angeordnet ist. Die erste Messelektrode 10 und die zweite Messelektrode 11 sind im galvanischen Kontakt mit dem zweiten Medium 9. Zwischen der ersten Messelektrode 10 und der zweiten Messelektrode 11 liegt die durch den Potentialverlauf im zweiten Medium 9 verursachte Induktionsspannung *u*_{I} an, die der Steuerungseinrichtung 6 zugeführt ist.

Die Steuerungsreinrichtung 6 misst die Induktionsspannung *u*_{I} und bestimmt in diesem Ausführungsbeispiel unter Verwendung der gemessenen Induktionsspannung *u*_{I} und der Innenquerschnittsfläche des Messrohrs 2 den Volumendurchfluss des zweiten Mediums 9 durch das Messrohr 2, wobei die Steuerungseinrichtung 6 berücksichtigt, dass die Induktionsspannung *u*_{I} proportional sowohl zur Durchflussgeschwindigkeit des zweiten Mediums 9 durch das Messrohr 2 als auch zur magnetischen Flussdichte des Magnetfelds 4 im zweiten Medium 9 ist.

In diesem Ausführungsbeispiel wird die magnetische Feldstärke des Magnetfelds 4 als die Stärke des Magnetfelds 4 angenommen. Zur Messung der magnetischen Feldstärke bietet sich ein Sensor an, der den Hall-Effekt ausnutzt, weshalb hier der Hall-Sensor 5 im Magnetfeld 4 im Luftspalt zwischen dem Messrohr 2 und dem Joch 8 angeordnet ist. Er erzeugt die Messspannung *u*_{M}, die zur magnetischen Feldstärke des Magnetfelds 4, der er ausgesetzt ist, proportional ist. Die Messspannung *u*_{M} ist der Steuerungseinrichtung 6 zugeführt. Die Steuerungseinrichtung 6 misst die Messspannung *u*_{M} und bestimmt aus der gemessenen Messspannung *u*_{M} dann die magnetische Feldstärke des Magnetfelds 4.

Die Steuerungseinrichtung 6 ist in diesem Ausführungsbeispiel ausgebildet, den Spulenstrom *i*_{S} mit einem konstanten Betrag in die Spule 7 einzuprägen und die Richtung des Spulenstroms *i*_{S} nach jeweils einem Invertierungsintervall umzukehren. Dadurch wird auch das Magnetfeld 4 nach jedem der Invertierungsintervalle umgekehrt, weshalb das Magnetfeld 4 auch als geschaltetes oder als getaktetes Gleichmagnetfeld bezeichnet wird. In diesem Ausführungsbeispiel sind die zeitlichen Dauern der Invertierungsintervalle gleich. In einem anderen Ausführungsbeispiel sind die zeitlichen Dauern der Invertierungsintervalle jedoch voneinander verschieden.

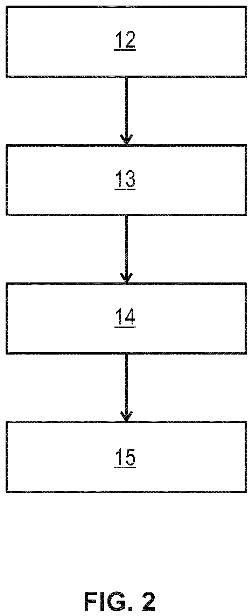

Im Folgenden wird ein Verfahren beschrieben, das die in dem in Fig. 2 dargestellten Ablaufplan aufgeführten Verfahrensschritte aufweist.

Der erste Verfahrensschritt 12 wird nicht während des regulären Betriebs des magnetisch-induktiven Durchflussmessgeräts 1, sondern während einer Kalibrierung des magnetisch-induktiven Durchflussmessgeräts 1 ausgeführt. In dem ersten Verfahrensschritt 12 wird das Messrohr 2 mit einem ersten Medium vollständig befüllt, wobei das erste Medium z. B. Wasser ist und im befüllten Messrohr 2 stillsteht. Dann wird von der Steuerungseinrichtung 6 über einem ersten Messintervall die Stärke des Magnetfelds 4 gemessen und eine Ableitung nach der Zeit der Stärke des gemessenen Magnetfelds 4 für das erste Messintervall bestimmt.

Die Ableitung nach der Zeit der Stärke des Magnetfelds 4 ist eine neue Kennlinie des magnetisch-induktiven Durchflussmessgeräts 1, welche das magnetisch-induktive Durchflussmessgerät 1 charakterisiert. Es ist erkannt worden, dass Abweichungen von der Kennlinie mit einem Nulldurchflussfehler korrespondieren. Abweichungen von dieser Kennlinie treten beim regulären Betrieb des magnetisch-induktiven Durchflussmessgeräts 1 z. B. dann auf, wenn sich Eigenschaften von dem Joch 8 mit der Zeit ändern.

Die auf den ersten Verfahrensschritt 12 folgenden Verfahrensschritte werden während des regulären Betriebs des magnetisch-induktiven Durchflussmessgeräts 1 von der Steuerungseinrichtung 6 ausgeführt, während das Messrohr 2 von dem zweiten Medium 9, welches hier ebenfalls Wasser ist, durchflossen wird. Das erste Medium und das zweite Medium 9 sind in diesem Ausführungsbeispiel identisch, können aber auch voneinander verscheiden sein.

In dem zweiten Verfahrensschritt 13 wird über einem zweiten Messintervall die Stärke des Magnetfelds 4 gemessen und eine Ableitung nach der Zeit der gemessenen Stärke des Magnetfelds 4 für das zweite Messintervall bestimmt.

In dem dritten Verfahrensschritt 14 wird eine erste Ableitungsabweichung der Ableitung für das zweite Messintervall von der Ableitung für das erste Messintervall bestimmt, indem die Differenz der Ableitung für das zweite Messintervall von der Ableitung für das erste Messintervall gebildet wird.

In dem vierten Verfahrensschritt 15 wird die bestimmte erste Ableitungsabweichung einem Nulldurchflussfehler zugeordnet. Zusätzlich wird während des zweiten Verfahrensschritts 13 im zweiten Messintervall ein Durchfluss des zweiten Mediums 9 durch das Messrohr 2 gemessen und der gemessene Durchfluss um den Nulldurchflussfehler korrigiert, indem der Nulldurchflussfehler von dem gemessenen Durchfluss subtrahiert wird.

Im vorliegenden Verfahren sind die Invertierungsintervalle konstant, das heißt, ihre zeitlichen Dauern sind konstant. Sowohl das erste als auch das zweite Messintervall entsprechen jeweils einem Invertierungsintervall. Die Ableitung nach der Zeit der gemessenen Stärke des Magnetfelds 4 für das erste und das zweite Messintervall wird jeweils im gesamten Messintervall bestimmt.

### Bezugszeichen:

- 1: Magnetisch-induktives Durchflussmessgerät
- 2: Messrohr
- 3: Magnetfelderzeugungseinrichtung
- 4: Magnetfeld
- 5: Hall-Sensor
- 6: Steuerungseinrichtung
- 7: Spule
- 8: Joch
- 9: Zweites Medium
- 10: Erste Elektrode
- 11: Zweite Elektrode
- 12: Erster Verfahrensschritt
- 13: Zweiter Verfahrensschritt
- 14: Dritter Verfahrensschritt
- 15: Vierter Verfahrensschritt

- *i*_{S}: Spulenstrom
- *u*_{I}: Induktionsspannung
- *u*_{M}: Messspannung

## Patentansprüche

1. Verfahren zur Durchflussmessung durch ein magnetisch-induktives Durchflussmessgerät (1) mit einem Messrohr (2) und einer Magnetfelderzeugungseinrichtung (3),
wobei von der Magnetfelderzeugungseinrichtung (3) ein Magnetfeld (4) erzeugt wird und wobei das Magnetfeld (4) in zeitlichen Abständen von Invertierungsintervallen invertiert wird,
**dadurch gekennzeichnet,**
**dass** das Messrohr (2) mit einem ersten Medium befüllt wird, über einem ersten Messintervall die Stärke des Magnetfelds (4) gemessen wird und eine Ableitung nach der Zeit der gemessenen Stärke des Magnetfelds (4) für das erste Messintervall bestimmt wird,
**dass** das Messrohr (2) von einem zweiten Medium (9) durchflossen wird, über einem zweiten Messintervall die Stärke des Magnetfelds (4) gemessen wird und eine Ableitung nach der Zeit der gemessenen Stärke des
Magnetfelds (4) für das zweite Messintervall bestimmt wird,
**dass** eine erste Ableitungsabweichung der Ableitung für das zweite Messintervall von der Ableitung für das erste Messintervall bestimmt wird und dass die bestimmte erste Ableitungsabweichung einem Nulldurchflussfehler zugeordnet wird.

2. Verfahren nach Anspruch 1, **dadurch gekennzeichnet, dass** das erste Messintervall und das zweite Messintervall jeweils einem der Invertierungsintervalle entsprechen.

3. Verfahren nach Anspruch 1 oder 2, **dadurch gekennzeichnet, dass** im zweiten Messintervall ein Durchfluss des zweiten Mediums (9) durch das Messrohr (2) gemessen wird und der gemessene Durchfluss um den Nulldurchflussfehler korrigiert wird.

4. Verfahren nach Anspruch 1 oder 2, **dadurch gekennzeichnet, dass** über einem dritten Messintervall die Stärke des Magnetfelds (4) gemessen wird und eine Ableitung nach der Zeit der gemessenen Stärke des Magnetfelds (4) für das dritte Messintervall bestimmt wird,
dass eine zweite Ableitungsabweichung der Ableitung für das dritte Messintervall von der Ableitung für das erste Messintervall bestimmt wird und
dass im dritten Messintervall ein Durchfluss des zweiten Mediums (9) durch das Messrohr (2) gemessen wird,
wobei die Stärke des Magnetfelds (4) im dritten Messintervall derart eingestellt wird, dass die zweite Ableitungsabweichung zumindest reduziert ist im Vergleich zur ersten Ableitungsabweichung.

5. Verfahren nach Anspruch 1 oder 2, **dadurch gekennzeichnet, dass** über einem dritten Messintervall die Stärke des Magnetfelds (4) gemessen wird und die Ableitung nach der Zeit der gemessenen Stärke des Magnetfelds (4) für das dritte Messintervall bestimmt wird,
dass eine zweite Ableitungsabweichung der Ableitung für das dritte Messintervall von der Ableitung für das erste Messintervall bestimmt wird und
dass im dritten Messintervall ein Durchfluss des zweiten Mediums (9) durch das Messrohr (2) gemessen wird, dass im zweiten Messintervall ein Durchfluss des zweiten Mediums (9) durch das Messrohr (2) gemessen wird und ein Mittelwert aus dem im zweiten Messintervall gemessenen Durchfluss und dem im dritten Messintervall gemessenen Durchfluss bestimmt wird,
wobei die Stärke des Magnetfelds (4) im dritten Messintervall derart eingestellt wird, dass die zweite Ableitungsabweichung der invertieren ersten Ableitungsabweichung entspricht.

6. Verfahren nach einem der Ansprüche 4 bis 5, **dadurch gekennzeichnet, dass** das dritte Messintervall einem weiteren der Invertierungsintervalle entspricht.

7. Verfahren nach einem der Ansprüche 1 bis 6, **dadurch gekennzeichnet, dass** die Invertierungsintervalle konstant sind.

8. Verfahren nach einem der Ansprüche 1 bis 7, **dadurch gekennzeichnet, dass** eine magnetische Feldstärke des Magnetfelds (4) von einem Hallsensor (5) gemessen wird und dass die gemessene magnetische Feldstärke als die Stärke des Magnetfelds (4) angenommen wird oder aus der gemessenen magnetischen Feldstärke die Stärke des Magnetfelds (4) bestimmt wird.

9. Verfahren nach einem der Ansprüche 1 bis 7, **dadurch gekennzeichnet, dass** eine zeitliche Änderung einer magnetischen Flussdichte des Magnetfelds (4) von einer Messspule gemessen wird und dass die gemessene zeitliche Änderung der magnetischen Flussdichte als Messung der Stärke des Magnetfelds (4)und als Ableitung nach der Zeit der Stärke des Magnetfelds (4) angenommen wird.

## Claims

1. Method for flow measurement using a magnetic-inductive flowmeter (1) with a measuring tube (2) and magnetic field generator (3),
wherein a magnetic field (4) is generated by the magnetic field generator (3) and wherein the magnetic field (4) is inverted at inverting intervals,
**characterized in**
**that** the measuring tube (2) is filled with a first medium, the strength of the magnetic field (4) is measured over a first measuring interval and a derivative with respect to time of the measured strength of the magnetic field (4) is determined for the first measuring interval,
**that** the measuring tube (2) is made to have a second medium (9) flow through it, the strength of the magnetic field (4) is measured over a second measuring interval and a derivative with respect to time of the measured strength of the magnetic field (4) is determined for the second measuring interval,
**that** a first derivative deviation of the derivative for the second measuring interval is determined using the derivative for the first measuring interval, and
**that** a zero flow error is assigned to the determined first derivative deviation.

2. Method according to claim 1, **characterized in that** the first measuring interval and the second measuring interval each correspond to one of the inverting intervals.

3. Method according to claim 1 or 2, **characterized in that** a flow of the second medium (9) through the measuring tube (2) is measured in the second measuring interval and the measured flow is corrected by the zero flow error.

4. Method according to claim 1 or 2, **characterized in that** the strength of the magnetic field (4) is measured over a third measuring interval and a derivative in respect to time of the measured strength of the magnetic field (4) is determined for the third measuring interval,
that a second derivative deviation of the derivative for the third measuring interval is determined from the derivative for the first measuring interval, and that a flow of the second medium (9) through the measuring tube (2) is measured in the third measuring interval,
wherein the strength of the magnetic field (4) is adjusted in the third measuring interval such that the second derivative deviation is at least reduced compared to the first derivative deviation.

5. Method according to claim 1 or 2, **characterized in that** the strength of the magnetic field (4) is measured over a third interval and the derivative in respect to time of the measured strength of the magnetic field (4) is determined for the third measuring interval,
that a second derivative deviation of the derivative for the third measuring interval is determined from the derivative for the first measuring interval, and
that a flow of the second medium (9) through the measuring tube (2) is measured in the third measuring interval, that a flow of a second medium (9) through the measuring tube (2) is measured in the second measuring interval and an average value is determined from the flow measured in the second interval and the flow measured in the third interval,
wherein the strength of the magnetic field (4) is adjusted in the third measuring interval such that the second derivative deviation corresponds to the inverted first derivative deviation.

6. Method according to any one of claims 4 to 5, **characterized in that** the third measuring interval corresponds to a further one of the inverting intervals.

7. Method according to any one of claims 1 to 6, **characterized in that** the inverting intervals are constant.

8. Method according to any one of claims 1 to 7, **characterized in that** a magnetic field strength of the magnetic field (4) is measured by a hall effect sensor (5) and that the measured magnetic field strength is adopted as the strength of the magnetic field (4) or the strength of the magnetic field (4) is determined from the measuring magnetic field strength.

9. Method according to any one of claims 1 to 7, **characterized in that** a temporal change of a magnetic flux density of the magnetic field (4) is measured by a measuring coil and that the measured temporal change of the magnetic flux density is adopted as a measurement of the strength of the magnetic field (4) and as a derivative in respect to time of the strength of the magnetic field (4).

## Revendications

1. Procédé de mesure de débit par un appareil de mesure magnétique-inductive de débit (1) doté d'un tube de mesure (2) et d'un dispositif (3) de formation d'un champ magnétique,
le dispositif (3) de formation d'un champ magnétique formant un champ magnétique (4) et le champ magnétique (4) étant inversé à la cadence temporelle d'intervalles d'inversion,
**caractérisé en ce que**
le tube de mesure (2) est rempli d'un premier fluide,
**en ce que** l'intensité du champ magnétique (4) est mesurée pendant un premier intervalle de mesure et une dérivée en fonction du temps de l'intensité mesurée du champ magnétique (4) pendant le premier intervalle de mesure est déterminée,
**en ce que** le tube de mesure (2) est traversé par un deuxième fluide (9),
**en ce que** l'intensité du champ magnétique (4) est mesurée pendant un deuxième intervalle de mesure et une dérivée en fonction du temps de l'intensité mesurée du champ magnétique (4) pendant le deuxième intervalle de mesure est déterminée,
**en ce qu'**un premier écart entre la dérivée pendant le deuxième intervalle de mesure et la dérivée pendant le premier intervalle de mesure est déterminé et
**en ce que** le premier écart déterminé entre les dérivées est associé à une erreur de passage par zéro.

2. Procédé selon la revendication 1, **caractérisé en ce que** le premier intervalle de mesure et le deuxième intervalle de mesure correspondent chacun à l'un des intervalles d'inversion.

3. Procédé selon les revendications 1 ou 2, **caractérisé en ce que** dans le deuxième intervalle de mesure, le débit du deuxième fluide (9) dans le tube de mesure (2) est mesuré et le débit mesuré est corrigé de l'erreur de passage par zéro.

4. Procédé selon les revendications 1 ou 2, **caractérisé en ce que** l'intensité du champ magnétique (4) est mesurée pendant un troisième intervalle de mesure et une dérivée en fonction du temps de l'intensité du champ magnétique (4) mesurée pendant le troisième intervalle de mesure est déterminée, **en ce qu'**un deuxième écart entre la dérivée dans le troisième intervalle de mesure et la dérivée dans le premier intervalle de mesure est déterminé, **en ce que** dans le troisième intervalle de mesure, le débit du deuxième fluide (9) dans le tube de mesure (2) est mesuré et **en ce que** l'intensité du champ magnétique (4) pendant le troisième intervalle de mesure est ajustée de telle sorte que le deuxième écart entre les dérivées soit au moins réduit par rapport au premier écart entre les dérivées.

5. Procédé selon les revendications 1 ou 2, **caractérisé en ce que** l'intensité du champ magnétique (4) est mesurée pendant un troisième intervalle de mesure et la dérivée par rapport au temps de l'intensité du champ magnétique (4) mesurée pendant le troisième intervalle de mesure est déterminée, **en ce qu'**un deuxième écart entre la dérivée pendant le troisième intervalle de mesure et la dérivée pendant le premier intervalle de mesure est déterminé, **en ce que** le débit du deuxième fluide (9) dans le tube de mesure (2) est mesuré pendant le troisième intervalle de mesure, **en ce que** le débit du deuxième fluide (9) dans le tube de mesure (2) est mesuré pendant le deuxième intervalle de mesure, **en ce qu'**une valeur moyenne du débit mesuré pendant le deuxième intervalle de mesure et du débit mesuré pendant le troisième intervalle de mesure est déterminée et **en ce que** l'intensité du champ magnétique (4) pendant le troisième intervalle de mesure est ajustée de telle sorte que le deuxième écart entre les dérivées corresponde à l'inverse du premier écart entre les dérivées.

6. Procédé selon l'une des revendications 4 à 5, **caractérisé en ce que** le troisième intervalle de mesure correspond à un autre des intervalles d'inversion.

7. Procédé selon l'une des revendications 1 à 6, **caractérisé en ce que** les intervalles d'inversion sont constants.

8. Procédé selon l'une des revendications 1 à 7, **caractérisé en ce que** l'intensité magnétique du champ magnétique (4) est mesurée par un capteur de Hall (5) et **en ce que** l'intensité magnétique mesurée est prise comme intensité du champ magnétique (4) ou **en ce que** l'intensité du champ magnétique (4) est déterminée à partir de l'intensité du champ magnétique mesurée.

9. Procédé selon l'une des revendications 1 à 7, **caractérisé en ce qu'**une modification au cours du temps de la densité de flux magnétique du champ magnétique (4) est mesurée par une bobine de mesure et **en ce que** la modification mesurée de la densité de flux magnétique est utilisée comme mesure de l'intensité du champ magnétique (4) et comme dérivée en fonction du temps de l'intensité du champ magnétique (4).
